## Europäisches Patentamt
## European Patent Office
## Office européen des brevets

(19)

(11) Veröffentlichungsnummer: **0 199 312**
**B1**

(12) **EUROPÄISCHE PATENTSCHRIFT**

(45) Veröffentlichungstag der Patentschrift: **06.02.91**

(21) Anmeldenummer: **86105414.6**

(22) Anmeldetag: **18.04.86**

(51) Int. Cl.⁵: **G 01 N 13/00,** G 01 N 11/00, G 01 B 11/06

(54) **Verfahren und Vorrichtung zur Bestimmung der Wandschubspannung oder der Viskosität von Flüssigkeiten an Modellen und anderen umströmten Körpern.**

(30) Priorität: **24.04.85 DE 3514801**

(43) Veröffentlichungstag der Anmeldung:
**29.10.86 Patentblatt 86/44**

(45) Bekanntmachung des Hinweises auf die Patenterteilung:
**06.02.91 Patentblatt 91/06**

(84) Benannte Vertragsstaaten:
**CH DE FR LI**

(56) Entgegenhaltungen:
**DE-A-1 623 319**
**US-A-3 495 445**
**US-A-4 377 343**

**PATENT ABSTRACTS OF JAPAN, Band 9, Nr. 250 (P-394) 1973r, 8. Oktober 1985; & JP-A-60 102 506**

**"The measurement of viscosity by optical techniques applied to a falling liquid film", Journal of physics E scientific Instruments, vol. 9, no. 11, (1976), page 967**

(73) Patentinhaber: **Deutsche Forschungsanstalt für Luft- und Raumfahrt e.V.**
**Linder Höhe Postfach 90 60 58**
**D-5000 Köln 90 (DE)**

(72) Erfinder: **Bütefisch, Karl-Aloys, Dr. Dipl.-Phys.**
**Hirtenweg 5**
**D-3406 Bovenden 1 (DE)**
Erfinder: **Hornung, Prof. Dr.**
**Tannenweg 4**
**D-3406 Bovenden 1 (DE)**

(74) Vertreter: **Rehberg, Elmar, Dipl.-Ing.**
**Postfach 3162 Am Kirschberge 22**
**D-3400 Göttingen (DE)**

EP 0 199 312 B1

**Beschreibung**

Die Erfindung bezieht sich auf ein Verfahren zur Bestimmung der Wandschubspannung oder der Viskosität von Flüssigkeiten an Modellen und anderen umströmten Körpern, in dem auf die Oberfläche des Körpers an der Meßstelle eine viskose durchsichtige Flüssigkeit in einer Schicht aufgebracht und die infolge der Strömungsbedingungen eintretende Dicken- und/oder Oberflächenneigungsänderung der Schicht mit einem Lichtstrahl detektiert wird. Die Erfindung zeigt gleichzeitig eine Vorrichtung zur Durchführung dieses Verfahrens mit einer Lichtquelle, einer Schicht einer viskosen durchsichtigen Flüssigkeit und einer Photodiode zur Detektierung des reflektierten Lichtstrahls.

Zur Beschreibung der Umströmung eines Körpers ist die genaue Kenntnis der lokalen Wandschubspannung, der Größe, der Richtung und der Verteilung nach von großer Wichtigkeit. Ein umströmter Körper kann ein Windkanalmodell, aber auch ein Originalgerät am Boden oder in der Luft, beispielsweise ein Auto oder ein Fluggerät, sein. Die dabei experimentall zu ermittelnden Daten dienen vielfach der Überprüfung universeller Gesetzmäßigkeiten und theoretischer Modellvorstellunge, so daß es notwendig ist, die Messung der Wandschubspannung mit entsprechender Genauigkeit und ohne Beeinträchtigung der Strömung durchzuführen.

Ein Verfahren und eine Vorrichtung der eingangs beschriebenen Art sind durch Tanner & Blows, "A study of the motion of oil films on surfaces in airflow, with application to the measurement of skin friction", Journal of Physics E: Scientific Instruments 1976, Vol. 9, pp. 194—202, bekannt. Damit ist es möglich, den Absolutwert der Wandschubspannung auf optischem Wege berührungsfrei zu messen. Zu diesem Zweck wird auf der Oberfläche des Modells von außen her ein Ölfilm aufgebracht. Ebenfalls von außen wird dann ein von einem Laser erzeugter Lichtstrahl auf den Ölfilm gerichtet. Ein Teil des Lichtstrahls reflektiert an der Oberfläche des Ölfilms, ein anderer Teil an der Oberfläche des Modells. Das reflektierte Licht wird durch eine Sammellinie gesammelt. Eine Photodiode dient zur Detektierung der wechselnden Helligkeit, die sich aufgrund von Interferenzen ergibt. Damit ist eine punktartige Messung an der einzelnen Meßstelle möglich. Zu einer solchen Messung wird vereinfachend die Tatsache ausgenutzt, daß ein dünner Ölfilm aufgrund der Wandschubspannung $\tau$ bei konstanten Strömungsbedingungen mit der Zeit t auf dem Wegelement d in Strömungsrichtung eine Dickenänderung y erfährt, die nach der Formel

$$y = \frac{\mu d}{\tau t}$$

gleich der inversen Wandschubspannung $\tau$ ist, wobei $\mu$ die Viskosität des verwendeten Ölfilms bedeutet. Das Verfahren läuft darauf hinaus, bei bekanntem $\mu$ und d die beiden Größen t (im Bereich von Sekunden) und y (im Bereich von ca. 100 $\mu$m) zu bestimmen. Die Anwendung dieses bekannten Verfahrens ist mit zahlreichen Nachteilen verbunden. So müssen hinreichend große Fenster zum Zuleiten des Lichtstrahls und zum Ableiten des reflektierten Lichtstrahls, z.B. in dem Windkanal, in welchem das Modell untersucht wird, vorgesehen sein. In Windkanälen ohne Fenster ist das Verfahren praktisch nicht anwendbar. Auch bei dynamischen Untersuchungen an sich bewegenden Objekten, insbesondere Flugzeugen, kann das Verfahren nicht durchgeführt werden, da sowohl die Lichtquelle wie auch die Auswerteeinrichtung mitgeführt werden müssen. Weiterhin sind bei der Anwendung dieses Verfahrens umfangreiche Justierarbeiten notwendig. Zur Vorbereitung einer jeden Messung und bei jeder Winkeländerung des Modells muß der Windkanalbetrieb unterbrochen werden, so daß die Messung entsprechend lange dauert und große Kosten verursacht. Wenn die Oberfläche des Modells dort, wo gemessen werden soll, sehr stark gekrümmt ist, erschwert dies die Messung; in Sonderfällen wird die Messung unmöglich, weil das reflektierte Licht nicht mehr aufgenommen werden kann.

Zur Bestimmung der Viskosität von Flüssigkeiten sind mehrere Verfahren bekannt:

Nach einem ersten Verfahren wird die Durchflußmenge Q der Flüssigkeit durch eine Kapillare mit dem Innenradius R und der Länge L unter der antreibenden Druckdifferenz $\Delta P$ unter Ausnutzung des Gesetzes von Hagen-Poiseuille bestimmt und daraus die Viskosität nach folgender Formel errechnet:

$$Q = \frac{\pi \cdot R \cdot 4}{8 \cdot \eta \cdot L} \Delta P.$$

Ein weiteres Verfahren zur Bestimmung der Viskotität von Flüssigkeiten wurde von L. H. Tanner, "The measurement of viscosity by optical technics applied to a falling film", Journal of Physics E. Scientific Instruments (1976), Vol. 9, p. 967 beschrieben, bei dem auf optischem Wege die Viskosität erfaßt werden kann. Das Verfahren nutzt den Zusammenhang nach der obigen Formel aus, wobei eine interferometrische Bestimmung der Schichtdicke d einer Flüssigkeit mit der Viskosität $\eta$ erfolgt. Auch dabei wird ein Lichtstrahl von außen auf eine an einer senkrechten Wand herabfließende Flüssigkeit gelenkt und der reflektierte Strahl in einem Photodetektor detektiert. Der Lichtstrahl wird einmal an der Grenzfläche zwischen Flüssigkeit und senkrechter Wand und ein zweites Mal an der Grenzfläche zwischen Flüssigkeit und Luft reflektiert. Beide reflektierte Strahlen interferieren miteinander. Im Photodetektor wird als Ergebnis der Interferenz in Abhängigkeit von der Dicke des Films der Flüssigkeit eine Intensitätsänderung Hell-Dunkel-Hell festgestellt, die sich mit der Zeit bei verringernder Dicke verlangsamt. Durch Auszählung kann die Viskosität bestimmt werden.

Das zuerst beschriebene Verfahren läßt sich noch verfeinern und erreicht dann eine ziemlich hohe Genauigkeit; jedoch werden größere Mengen der zu untersuchenden Flüssigkeit benötigt. Viskositätsbestimmungen im molekularen Bereich (Medizin) sind nicht möglich. Dagegen ist dieses Verfahren insoweit vorteilhaft, als auch nicht transparente Flüssigkeiten untersucht werden können.

Bei dem mit Interferenz arbeitenden Verfahren nach Tanner wird der an der Grenzfläche zwischen Flüssigkeit und festem Körper reflektierte Strahl durch die Dicke der Flüssigkeitsschicht beeinträchtigt, so daß sich unterschiedliche Interferenzbedingungen ergeben. Die Genauigkeit dieses Verfahrens wird dadurch beschränkt, daß der Auftreffpunkt des auf die Flüssigkeit geschickten Strahls von der Schichtdicke der Flüssigkeit abhängig und damit nicht konstant ist. Weiterhin ergeben sich Justierschwierigkeiten.

Der Erfindung liegt die Aufgabe zugrunde, ein Verfahren und eine Vorrichtung aufzuzeigen, mit denen es möglich ist, die Wandschubspannung absolut oder relativ in ihrer Größe, Richtung und Verteilung ohne wesentliche Störung der Strömung oder die Viskostiät von Flüssigkeiten zu messen. Die Messung soll auch ohne Unterbrechung der Strömung wiederholbar sein. Die Messung soll auch bei dynamischen Untersuchungen, z.B. an fliegenden Körpern, durchführbar sein.

Erfindungsgemäß wird dies dadurch erreicht, daß der Lichtstrahl aus dem Innern des umströmten Körpers in Richtung auf die Oberfläche des Körpers und in die Schicht der viskosen Flüssigkeit geleitet wird und daß der reflektierte Lichtstrahl im Innern des umströmten Körpers aufgefangen wird. Die Erfindung kehrt sich damit vom Stand der Technik ab und benutzt den Lichtstrahl gleichsam von der anderen Seite her—also vom Innern—, um die Wandschubspannung auch absolut zu bestimmen. Dies hat den großen Vorteil, daß die Messung unabhängig von den äußeren Bedingungen, z.B. der Ausbildung eines Windkanals, ist und daß die Meßeinrichtung in einfacher Weise mit dem umströmten Körper bzw. in dem umströmten Körper mitgeführt werden kann, wenn z.B. eine Messung an einem fahrenden Auto oder einem Fluggerät durchgeführt werden soll. Die Umströmung des Körpers wird durch die Meßeinrichtung nicht beeinträchtigt. Ein wesentlicher Vorteil des erfindungsgemäßen Verfahrens liegt darin, daß jede Messung ohne Unterbrechung der Strömungsbedingungen wiederholbar ist. Dabei ist es sehr einfach möglich, die Schicht der viskosen Flüssigkeit zur Wiederholung der Messung neu zu bilden oder bei Bedarf auch eine Flüssigkeit anderer Viskosität zu benutzen. Zu diesem Zweck wird zusätzlich zu dem Lichstrahl auch die viskose Flüssigkeit aus dem Innern des umströmten Körpers an die Oberfläche des Körpers geleitet. Damit kann die Schicht der viskosen Flüssigkeit ohne Beeinträchtigung der Strömung jederzeit neu gebildet werden. Es ist auch möglich, mehrere Lichtstrahlen in Verbindung mit einer Leitung für die viskose Flüssigkeit zu benutzen, um die Verteilung der Wandschubspannung festzustellen. Die Wandschubspannung an jeder Meßstelle ist unmittelbar ablesbar.

Bei der Bestimmung der Viskosität von Flüssigkeiten bleibt vorteilhaft der Winkel des beleuchtenden Strahls unabhängig von der Schichtdicke und der Schichtneigung immer konstant.

Die Vorrichtung zur Durchführung des Verfahrens arbeitet mit einer Lichtquelle, einer Schicht einer viskosen durchsichtigen Flüssigkeit und einer Photodiode zur Detektierung des reflektierten Lichtstrahls. Sie kennzeichnen sich erfindungsgemäß dadurch, daß die Vorrichtung zur Dicken- und/oder Oberflächenneigungsänderungsbestimmung einen bündig zu der Oberfläche des umströmten Körpers einbaubaren flächenhaften Sensor aufweist, und daß ein in der Sensoroberfläche endender Kanal zum Aufbringen der Flüssigkeit und mindestens eine ebenfalls in der Sensoroberfläche endende Lichtleitung zur Zuleitung des Lichtstrahls und zur Ableitung des reflektierten Lichtstrahls vorgesehen sind. Zum Detektieren kann ein Michelson-Interferometer, eine Photodiode und eine nachgeschaltete Auswerteelektronik vorgesehen sein. Die neuen, flächenhaften Sensoren können immer wieder verwandt werden, d.h. der Umbau und die Wiederverwendung in anderen Modellen ist ohne Weiteres möglich. Der flächenhafte Sensor ersetzt einen Teil der Oberfläche des Modells bzw. des umströmten Körpers und bildet damit selbst einen Teil der Oberfläche des umströmten Körpers an der Meßstelle. Die gesamte Meßeinrichtung bzw. deren wesentlichen Teile sind im Innern des umströmten Körpers untergebracht, so daß die Strömung um den Körper herum hierdurch nicht beeinträchtigt werden kann.

Bei der Bestimmung der Viskosität von Flüssigkeiten wird die Vorrichtung gleichsam um 90° gedreht, so daß die Meßstelle bzw. die Oberfläche des Sensors senkrecht angeordnet ist. In dieser neuen Anordnung und durch die Benutzung des Strahlengangs aus dem Innern heraus bleibt der Winkel des beleuchtenden Strahls unabhängig von der Schichtdicke und der Schichtneigung immer konstant.

Als Lichtleitung können Lichtfaserkabel und als Lichtquelle ein Laser vorgesehen sein. Damit ergibt sich die Möglichkeit, den Sensor auch bei erschwerten Einbaubedingungen zu verwenden. Der Sensor kann auch mehrere in der Sensoroberfläche endende Lichtleitungen aufweisen, um die Verteilung der Wandschubspannung in der Oberfläche festzustellen. Durch die Enden mindestens dreier Lichtleitungen wird eine Ebene festgelegt, so daß vorteilhaft auch deren Neigung feststellbar ist. Ein weiterer Meßpunkt kann der Überprüfung dienen. Es ist auch möglich, bei Verwendung andere den einzelnen Meßpunkten zugeordnete Kanäle für Flüssigkeiten mit unterschiedliche Viskosität einzusetzen. Es kann auch eine Auflösung von weniger mm² bei der lokalen Absolutbestimmung der Wandschubspannung erreicht werden. Die Bestimmung der Wandschubspannung ist mit der Erfindung auch bei komplizierten Strömungen, insbesondere 3-D-Strömungen, Strömungen mit Druck- oder Schubspannungsgradienten möglich.

In einer anderen Ausführungsform kann der Sensor aus lichtleitendem Material bestehen und sich normal zu der umströmten Oberfläche des Körpers erstrecken. Der Sensor endet dort in einer durchsichtigen Fläche, in der ein Umlenkprisma für den zuzuleitenden Lichtstrahl und reflektionsfrei eine Positionsdiode für den reflektierten Lichtstrahl vorgesehen sind. Die Positionsdiode kann eine Vierquadrantendiode, eine ZD-Zeilenmatrix o. dlg. sein. Damit vereinfacht sich die Vorrichtung, mit der nur die Änderung der Oberflächenneigung bestimmbar ist.

Der Sensor aus lichtleitendem Material kann Blockform aufweisen und einen strahlenteilenden Schnitt besitzen. Dabei ist an dem Sensor eine Korrekturoptik zum Aufweiten und/oder Justieren des abgeteilten Strahls vorgesehen. Dem Sensor ist ein zweiter Sensor aus lichtleitendem Material zugeordnet, der zu diesem in einem rechten Winkel angeordnet ist, so daß im Bereich dieses zweiten Sensors der abgeteilte Strahl und der reflektierte Strahl miteinander zur Interferenz gebracht werden. Zur Bestimmung der Viskosität von Flüssigkeiten ist der Sensor mit seiner von der Flüssigkeit überströmten Oberfläche vertikal angeordnet.

Die Erfindung wird anhand zweier Ausführungsbeispiele der Vorrichtung weiter beschrieben. Es zeigen:

Figur 1 eine Seitenansicht auf den Sensor mit Prinzipskizze der Meßanordnung,

Figur 2 eine perpsektivische Aufsicht auf den Sensor,

Figur 3 den Sensor in einer zweiten Ausführungsform,

Figur 4 die wesentlichen Teile der Vorrichtung in einer weiteren Ausführungsform und

Figur 5 die Anordnung der Vorrichtung zur Bestimmung der Viskosität von Flüssigkeiten.

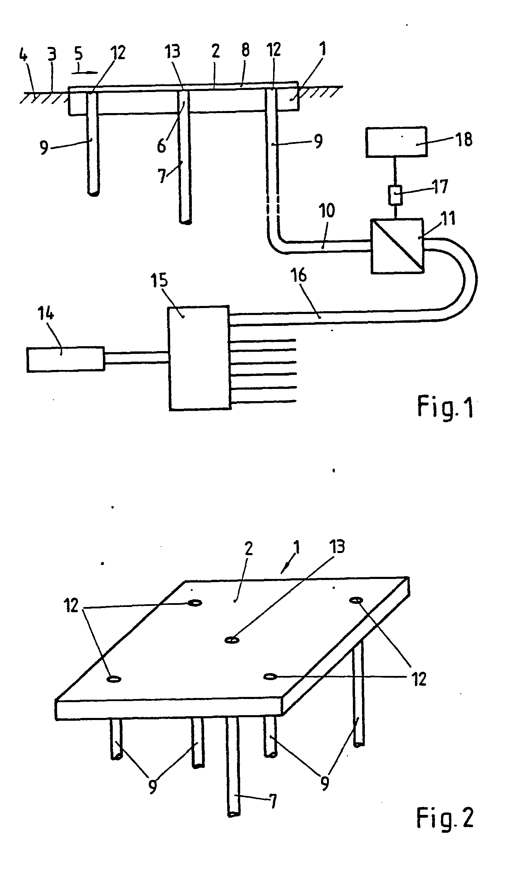

Der in Figur 1 dargestellte Sensor (1) besteht aus einem flächenhaften Element bestimmter Ausdehnung, welches mit seiner Fläche (2) bündig zu der Oberfläche (3) des umströmten Körpers (4) einbaubar ist. Die Umströmung des Körpers (4) erfolgt auf dessen Außenseite entsprechend dem Pfeil (5).

In dem Sensor (1) endet ein Kanal (6), der mit einem Röhrchen (7) in Verbindung steht. Das Röhrchen (7) und der Kanal (6) dienen dazu, eine durchsichtige viskose Flüssigkeit als Schicht (8) auf die Fläche (2) und damit in die Oberfläche (3) des umströmten Körpers (4) einzubringen. Die Schicht (8) ist hier mit gleicher Dicke über die flächenhafte Erstreckung des Sensors (1) gezeichnet und wird infolge der Umströmung gemäß Pfeil (5) eine lokale Dickenänderung erfahren. In dem Sensor (1) bzw. dessen Fläche (2) enden mehrere Lichtleitungen (9) (mindestens drei), die insbesondere als Lichtfaserkabel ausgebildet sind. Diese Lichtleitungen (9) sind mit einem Arm (10) eines Michelson-Interferometers (11) verbunden. Die Enden (12) der Lichtleitungen (9) in der Fläche (2) können nach Art eines Quadrats angeordnet sein, wie dies Figur 2 zeigt, wobei das Ende (13) des Kanals (6) bzw. des Röhrchens (7) im Zentrum angebracht sein kann.

Zur Erzeugung des Lichtstrahls ist ein Laser (14) vorgesehen, dem ein Strahlenaufteiler (15) nachgeordnet ist. Mit einer Lichtleitung (16) wird dem Michelson-Interferometer (11) das Licht zugeleitet. Für die Auswertung des reflektierten Lichtstrahls ist eine Photodiode (17) und eine Auswerteelektronik (18) vorgesehen.

Zur Durchführung einer Messung wird vor oder während des Eintritts der Strömungsbedingungen gemäß Pfeil (5) eine gewisse Menge der Flüssigkeit durch das Röhrchen (7) und den Kanal (6) an der Fläche (2) des Sensors (1) zum Ausfluß gebracht, so daß es sich an der Oberfläche verteilt. Das von dem Laser (14) erzeugte Licht gelangt über den Strahlaufteiler (15), die Lichtleitung (16) zum dem Michelson-Interferometer (11) und von dessen Arm (10) über die Lichtleitung (9) in das Ende (12), also ebenfalls in die Oberfläche und damit in die Schicht (8) der viskosen Flüssigkeit. Je nach der örtlichen Dicke der Schicht (8) treten Helligkeitsänderungen des reflektierten Lichts auf der Photodiode (17) auf und werden aufgrund von Interferenzen in der Photodiode (17) registriert und in der nachgeschalteten Auswerteelektronik (18) ausgewertet. Das Licht tritt dabei aus den Armen (10) des Interferometers (11) in den freien Enden (12) der Lichtleitungen (9) in die Schicht (8) der Flüssigkeit ein und wird an der Grenze zwischen der Flüssigkeit und der umströmten Luft teilreflektiert. Nach dem Passieren des reflektierten Teillichts in dem Michelson-Interferometer (11) werden in der Photodiode (17) Helligkeitsänderungen detektiert, wenn sich der Lichtweg aufgrund der sich ändernden Dicke der Schicht (8) der Flüssigkeit unter den Strömungsbedingungen ändert. Wie in Figure 2 gezeigt, kann an vier Stellen des Sensors, nämlich an den vier Enden (12) der Lichtleitungen (9) die Dickenänderung der Schicht (8) gleichzeitig ermittelt werden. Dies geschieht mit Hilfe der Auswerteelektronik (18) als Funktion der Zeit, die auch aus den unterschiedlichen Dickenänderungen an den vier Punkten die Wandschubspannung und deren Richtung laufend errechnet. Wenn große Dickenänderungen vorliegen, können die Helligkeitsänderungen in Vor- bzw. Rückwärtszählern direkt verarbeitet werden. Dies führt zu einem digitalen Auswerteverfahren. Falls jedoch nur kleine Dickenänderungen zu erwarten sind, müssen auch die Übergänge von einem Interferenzwert zum anderen ausgewertet werden. Das erfordert zunächst eine analoge Signalverarbeitung.

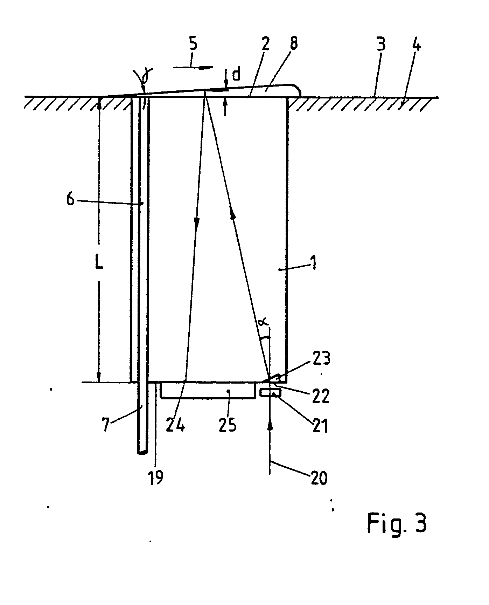

Die in Figur 3 dargestellte Vorrichtung benutzt einen Sensor (1) aus einem lichtdurchlässigen Körper, insbesondere Glas, der als Rundstab ausgebildet sein kann. Auch dieser Sensor (1) wird wieder mit seiner Fläche (2) bündig zu der Oberfläche (3) des umströmten Körpers (4) eingesetzt.

Er erstreckt sich auch normal zu der Oberfläche (3) und endet in einer Fläche (19), die insbesondere parallel zu der Fläche (2) angeordnet sein kann. Der Sensor (1) möge hier die Länge L besitzen. Über den Kanal (6) kann auch hier die viskose Flüssigkeit auf die Fläche (2) abgegeben werden, so daß sich infolge der Strömungsbedingungen gemäß Pfeil (5) die Schicht (8) bildet, die hier keilförmig mit dem Winkel γ infolge der Strömungsbedingungen sich ausbildet und verändert. Ein Laserstrahl (20) wird mit einer Fokussieroptik (21) auf eine Positionsdiode (25) fokusiert und tritt über ein Eintrittsfenster (22) und ein Umlenkprisma (23) in einem Winkel α in den Sensor (1) ein. Der Lichtstrahl gelangt über die Fläche (2) in die Schicht (8) der Flüssigkeit und wird teilweise an der Grenze der Flüssigkeit und des den Körper (4) umströmenden Fluids gemäß Pfeil (5) reflektiert, wobei er auf die Fläche (19) zurückgeworfen wird und dort an einer Auftreffstelle (24) auf die Positionsdiode (25) gelangt. Die Auftreffstelle (24) auf der Positionsdiode (25) ist, solange die Schicht (8) der Flüssigkeit durch das den Körper (4) umströmende Fluid nicht verändert wird, durch den Winkel α und die Länge L des Sensors sowie die Schichtdicke d vorgegeben. Wenn unter der Wirkung des strömenden Fluids sich die Schicht des Öls, z.B. Silikonöl, mit einer dem Meßproblem angepaßten Zähigkeit verändert und die Schicht (8) sich in einem Neigungswinkel γ gegenüber der Fläche (2) und damit der Oberfläche (3) des Körpers (4) einstellt, so wandert die Auftreffstelle (24) auf der xy-Ebene der Positionsdiode (25). Die Positionsdiode (25) ist so ausgebildet und angeordnet, daß die Auftreffstelle (24) in ihrer xy-Ebene festgestellt werden kann, so daß damit neben dem Neigungswinkel γ auch die Neigungsrichtung der Oberfläche der Schicht (8) meßbar wird. Wenn mit γx und γy die Änderungen der Auftreffstelle (24) angegeben werden, so ist

$$\gamma \approx = \frac{\sqrt{\gamma x^2 + \gamma y^2}}{2L}$$

wobei wegen

$$\gamma \approx = \frac{\mu}{\tau}$$

die zeitliche Änderung des Neigungswinkels γ den Betrag und das Verhältnis γx/γy in der xy-Ebene die Richtung der Wandschubspannung liefert. Da der Lichtstrahl oberhalb des Umlenkprismas (23) unter dem Winkel α gegenüber der Achse des Sensors (1) aus seiner Fläche (2) austritt, muß der Winkel α bei der Auswertung entsprechend berücksichtigt werden. Es ist aber auch möglich, die Positionsdiode (25) zu durchbohren und ohne ein Umlenkprisma (23) zu arbeiten. Der Laserstrahl (20) tritt dann zentral über die Bohrung der Positionsdiode (25) in den Sensor (1) ein und ist auf der Positionsdiode (25) bei entsprechender Auslenkung erfaßbar. Sehr kleine Auslenkungen sind dabei nicht mehr erfaßbar. Dies kann aber wieder ausgeglichen oder verändert werden, indem die Fläche (19) nicht parallel zu der Fläche (2) an dem Sensor (1) angeordnet wird. Dies bedeutet jedoch, daß der Einbau des Fensters in dem umströmten Körper (4) unter Berücksichtigung eines solchen Winkels der Fläche (19) zu erfolgen hat.

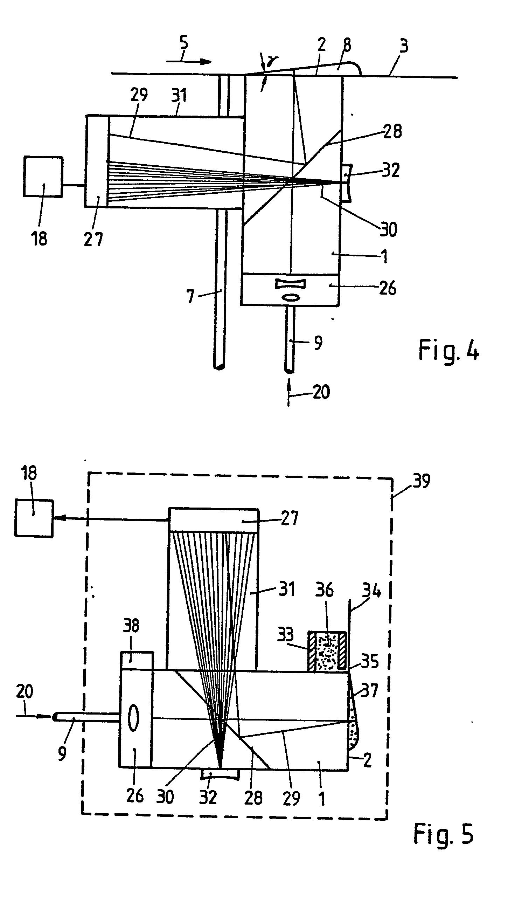

In Figur 4 sind die wesentlichen Teile einer weiteren Ausführungsform der Vorrichtung dargestellt. Auch hier wird über eine Lichtleitung (9) ein Laserstrahl (20) einer Aufbereitungsoptik (26) zugeführt, die den Lichtstrahl in üblicher Weise aufweitet und auf einem Detektor (27) abbildet. Der aufbereitete Lichtstrahl läuft durch den Sensor (1), der einen strahlenteilenden Schnitt (28) aufweist und damit die Funktion eines üblichen Strahlenteilerwürfels besitzt. Wie bereits am Beispiel der Figur 3 verdeutlicht, wird der Lichtstrahl an der Grenzfläche zwischen Flüssigkeit und Luft der Schicht (8) der Flüssigkeit teilreflektiert und gelangt als reflektierter Strahl (29) letztlich auf den Detektor (27), der aus vier Quadranten Photodiode ausgebildet sein kann. Über eine dem Detektor (27) nachgeschaltete Auswerteelektronik (18) wird die Auslenkung des reflektierten Strahls (29) sowohl in vertikaler wie auch in horizontaler Richtung erfaßt. Durch den strahlenteilenden Schnitt (28) wird ein abgeteilter Strahl (30) auf eine Korrekturoptik (32) geleitet und dort aufgeweitet, wobei auch dieser Strahl von dem Sensor (1) in den zweiten Sensor (31) übertritt und letztlich auch auf den Detektor (27) gelangt, jedoch in aufgeweiteter Form.

Wenn der Neigungswinkel γ der Schicht (8) der viskosen Flüssigkeit klein ist, interferiert der zum Detektor (27) abgelenkte reflektierte Strahl (29) mit dem abgeteilten Strahl (30), der evtl. über die Korrekturoptik (32) noch entsprechend justiert werden kann. Damit funktioniert diese Anordnung wie ein Michelson-Interferometer und mit Hilfe des Detektors (27) können Intensitätsänderungen beobachtet werden, die durch Weglängenänderungen in der Schicht (8) der viskosen Flüssigkeit entstehen. Auch hier kann die Flüssigkeit über eine Leitung oder ein Röhrchen (7) so zugeführt werden, daß sie letztlich als Schicht (8) in die Oberfläche des umströmten Körpers und damit an die Meßstelle gelangt. Um die Wandschubspannung zu bestimmen, sind zwei Auswertemethoden möglich. Bei großen Neigungswinkeln γ wird die Ablenkung im Detektor (27) in zwei Richtungen als Funktion der Zeit erfaßt. Bei kleinen Neigungswinkeln γ gibt die Zahl der Schwankungsperioden als Funktion der Zeit Aufschluß über die Wandschubspannung. Die Vorrichtung gemäß Figur 4 kann natürlich auch in um 90° gedrehter Anordnung zur Bestimmung der Viskosität von Flüssigkeiten benutzt werden.

Figur 5 zeigt eine ähnlich aufgebaute Anordnung zur Bestimmung der Viskosität von Flüssigkeiten. Auch hier wird über eine Lichtleitung (9) ein Laserstrahl (20) einer Aufbereitungsoptik (26) zugeführt, die hier als Fokusieroptik ausgebildet ist, um den reflektierten Strahl (29) auf dem Detektor (27) abzubilden. Der auf diese Weise durch die Aufbereitungsoptik (26) aufbereitete Strahl läuft durch den Sensor (1), der als transparenter Block ausgebildet ist und einen strahlenteilenden Schnicht (28) besitzt. Damit findet auch hier eine Teilung des eingeleiteten Strahls statt, und zwar in einen reflektierten Strahl (29) und einen abgeteilten Strahl (30). Der aufbereitete Strahl wird zunächst an der senkrecht stehenden Fläche (2) des Sensors (1) zwischen dem Material des transparenten Blocks und der Flüssigkeit teilweise in sich selbst reflektiert, teilweise am strahlenteilenden Schnitt (28) umgelenkt. Beide Strahlen durchlaufen letztlich den zweiten Sensor (31) und gelangen auf den Detektor (27), der als Photodetektor ausgebildet ist. Ein anderer Teil des aufbereiteten Strahls wird an der Grenzschicht zwischen Flüssigkeit und Luft reflektiert und gelangt als reflektierter Strahl (29) über den strahlenteilenden Schnitt (28) ebenfalls in den zweiten Sensor (31) und damit auf den Detektor (27). Der abgeteilte Strahl (30) kann mit einer Korrekturoptik (32) aufgeweitet und justiert gerichtet ebenfalls auf den Detektor (27) gelangen, so daß es dort zur Interferenz kommt. Solange noch keine Flüssigkeit auf der Fläche (2) vorhanden ist, interferiert der an der Grenzfläche zwischen dem Sensor (1) und der Luft in sich selbst reflektierte Teilstrahl mit dem abgelenkten Strahl (30) an dem Detektor (27). Das Ergebnis dieser Interferenz ist entweder eine große oder kleine Lichtintensität—unabhängig von der Zeit, also konstant—. Fließt nun aus einem Vorratsbehälter (33) durch kurzzeitiges Öffnen eines Schiebers (34) aus einer Ausflußöffnung (35) eine geringe Menge der zu untersuchenden Flüssigkeit (36) aus, so bildet sich eine Träne (37), die aufgrund der Schwerkraft an der Fläche (2), der senkrecht angeordnet ist, hinabfließt. Aufgrund des Zusammenwirkens der verschiedenen Kräfte bildet sich eine neue Grenzfläche zwischen Luft und Flüssigkeit aus, die nicht parallel zu der Fläche (2) ist. An dieser Grenzfläche entsteht der reflektierte und abgelenkte Strahl (29). Die Dicke d der Grenzfläche wird zur Zeit t im Abstand x von der Ausflußöffnung (35) entsprechend der Formel

$$d^2 = \frac{n \cdot x}{t \cdot \rho \cdot g}$$

wiedergegeben, wobei als Stoffkonstante die Viskosität η der Flüssigkeit neben der Konstanten Erdbeschleunigung g und der Dichte ρ der Flüssigkeit eingeht. Wenn die Träne (37) den konstanten Ort des Lichtstrahls an der Fläche (2) erreicht hat, wird der reflektierte Strahl (29) nun im wesentlichen an dieser neuen Grenzfläche zwischen Flüssigkeit und Luft reflektiert. Da sich die Dicke d mit der Zeit t ändert, ändern sich auch laufend die Interferenzbedingungen. Jetzt wechselt die Lichtintensität als Funktion der Zeit t, wobei eine Intensitätsänderung Hell-Dunkel-Hell einer Dickenänderung von λ/2 entspricht. Da in der zuvor angegebenen Formel die Zeit t im Nenner steht, sind die Dickenänderungen bei kleinen Zeiten groß. Als Folge sind auch die Intensitätsänderungen sehr schnell und können nur mit elektronischen Mitteln registriert werden, beispielsweise in der nachgeschalteten Auswerteelektronik (18). Für sehr große Zeiten t dauert der Wechsel Hell-Dunkel-Hell Stunden, d.h. es finden Dickenänderungen im molekularen Bereich statt.

Für die Messung muß die Gravitationskraft genau bekannt sein. Die Fläche (2) soll senkrecht stehen, damit die Erdbeschleunigung g entsprechend einwirken kann. Die Fläche (2) wird zweckmäßig mit Hilfe einer Wasserwaage (38) senkrecht ausgerichtet.

Da die Viskosität stark temperaturabhängig ist, wird die ganze Vorrichtung in einem thermostatisierten Behälter (39) untergebracht.

**Patentansprüche**

1. Verfahren zur Bestimmung der Wandschubspannung an Modellen und anderen umströmten Körpern oder der Viskosität von Flüssigkeiten, in dem auf die Oberfläche (3) des Körpers (4) an der Meßstelle eine viskose durchsichtige Flüssigkeit in einer Schicht (8) aufgebracht und die infolge der Strömungsbedingungen eintretende Dicken- und/oder Oberflächenneigungsänderung der Schicht (8) in einem Lichtstrahl detektiert wird, dadurch gekennzeichnet, daß der Lichtstrahl aus dem Innern des umströmten Körpers (4) in Richtung auf die Oberfläche (3) des Körpers (4) und in die Schicht (8) der viskosen Flüssigkeit geleitet wird und daß der reflektierte Lichtstrahl im Innern des umströmten Körpers (4) aufgefangen wird.

2. Verfahren nach Anspruch 1, dadurch gekennzeichnet, daß zusätzlich zu dem Lichtstrahl auch die viskose Flüssigkeit aus dem Innern des umströmten Körpers (4) in die Oberfläche (3) des Körpers (4) geleitet wird.

3. Verfahren nach Anspruch 1, dadurch gekennzeichnet, daß mehrere Lichtstrahlen in Verbindung mit einer Leitung für viskose Flüssigkeit benutzt werden.

4. Verfahren nach Anspruch 1, dadurch gekennzeichnet, daß zur Bestimmung der Viskosität von Flüssigkeiten die Meßstelle senkrecht angeordnet wird.

5. Verfahren nach Anspruch 1 oder 4, dadurch gekennzeichnet, daß der Lichtstrahl aus dem Innern des umströmten Körpers (4) aufgefüllt und der abgeteilte Strahl mit dem reflektierten Lichtstrahl zur Interferenz gebracht wird.

6. Vorrichtung zur Durchführung des Verfahrens nach Anspruch 1 bis 5, mit einer Lichtquelle, einer Schicht (8) einer viskosen durchsichtigen Flüssigkeit und einer Photodiode (17) zur Detektierung des reflektierten Lichtstrahls, dadurch gekennzeichnet, daß die Vorrichtung zur Dicken- und/oder Oberflächenneigungsänderungsbestimmung einen bündig zu der Oberfläche (3) des umströmten Körpers (4) einbaubaren, flächenhaften Sensor (1) aufweist, und daß ein in der Sensoroberfläche endender Kanal (6) zum Aufbringen der Flüssigkeit und mindestens eine ebenfalls in der Sensoroberfläche endende Lichtleitung (9) zur Zuleitung des Lichtstrahls und zur Ableitung des reflektierten Lichtstrahls vorgesehen sind.

7. Vorrichtung zur Durchführung des Verfahrens nach Anspruch 6, dadurch gekennzeichnet, daß zum Detektieren ein Michelson-Interferometer (11), eine Photodiode (17) und eine nachgeschaltete Auswerteelektronik (18) vorgesehen sind.

8. Vorrichtung nach Anspruch 6 oder 7, dadurch gekennzeichnet, daß als Lichtleitung (9) Lichtfaserkabel und als Lichtquelle ein Laser (14) vorgesehen sind.

9. Vorrichtung nach Anspruch 6 bis 8, dadurch gekennzeichnet, daß der Sensor (1) mehrere in der Sensoroberfläche endende Lichtleitungen (9) aufweist und daß zwischen Laser (14) und Michelson-Interferometer (11) ein Strahlaufteiler (15) vorgesehen ist.

10. Vorrichtung nach Anspruch 6 oder 8, dadurch gekennzeichnet, daß der Sensor (1) aus lichtleitendem Material besteht und sich normal zu der umströmten Oberfläche des Körpers (4) erstreckt und daß der Sensor (1) dort in einer durchsichtigen Fläche (19) endet, in der ein Umlenkprisma (23) für den zuzuleitenden Lichtstrahl und reflektionsfrei eine Positionsdiode (25) für den reflektierten Lichtstrahl vorgesehen sind.

11. Vorrichtung nach Anspruch 6, 8 oder 10, dadurch gekennzeichnet, daß der Sensor (1) aus lichtleitendem Material Blockform aufweist und einen strahlenteilenden Schnitt (28) besitzt.

12. Vorrichtung nach Anspruch 6 bis 11, dadurch gekennzeichnet, daß an dem Sensor (1) eine Korrekturoptik (32) zum Aufweiten und/oder Justieren des abgeteilten Strahls vorgesehen ist.

13. Vorrichtung nach Anspruch 6 bis 12, dadurch gekennzeichnet, daß dem Sensor (1) ein zweiter Sensor (31) aus lichtleitendem Material zugeordnet und zu diesem im rechten Winkel angeordnet ist.

14. Vorrichtung nach Anspruch 13, dadurch gekennzeichnet, daß zur Bestimmung der Viskosität von Flüssigkeiten der Sensor (1) mit seiner von der Flüssigkeit überströmten Oberfläche vertikal angeordnet ist.

**Revendications**

1. Procédé de détermination du frottement superficiel sur des modèles et sur d'autres corps entourés par un écoulement, ou de la viscosité de liquides, dans lequel un liquide visqueux transparent (4) est mis en place à la surface (3) du corps (4) à l'emplacement de mesure, sous forme d'une couche (8) et dans lequel la variation d'épaisseur et/ou d'inclinaison de la surface extérieure de la couche (8), causée par les conditions d'écoulement, est détectée au moyen d'un rayon lumineux, caractérisé par le fait que le rayon lumineux est guidé à partir de l'intérieur du corps (4) entouré par l'écoulement, en direction de la surface extérieure (3) du corps (4), jusque dans la couche (8) de liquide visqueux et que le rayon réfléchi est capté à l'intérieur du corps (4) entouré par l'écoulement.

2. Procédé selon la revendication 1, caractérisé par le fait qu'en plus du rayon lumineux, le liquide visqueux est également guidé à partir de l'intérieur du corps (4) entouré par l'écoulement jusque sur la surface (3) du corps (4).

3. Procédé selon la revendication 1, caractérisé par le fait que plusieurs rayons lumineux sont utilisés en liaison avec un conduit de liquide visqueux.

4. Procédé selon la revendication 1, caractérisé par le fait qu'en vue de la détermination de la viscosité de liquides, l'emplacement de mesure est disposé verticalement.

5. Procédé selon les revendications 1 à 4, caractérisé par le fait que le rayon lumineux est fourni à partir de l'intérieur du corps (4) entouré par l'écoulement et que le rayon issu de la division est mis en interférence avec le rayon lumineux réfléchi.

6. Dispositif destiné à l'exécution du procédé selon les revendications 1 à 5, comportant une source lumineuse, une couche (8) d'un liquide visqueux transparent et une photodiode (17) destinée à la détection du rayon lumineux réfléchi, caractérisé par le fait que le dispositif destiné à la détermination de la variation de l'épaisseur et/ou de l'inclinaison de la surface extérieure présente un capteur (1) superficiel susceptible d'être monté à la surface (3) du corps (4) entouré par l'écoulement, et que l'on prévoit un canal (6) débouchant à la surface extérieure du capteur, destiné à réaliser l'alimentation en liquide, et au moins un conducteur de lumière (9) destiné à guider le rayon lumineux et à dévier le rayon lumineux réfléchi.

7. Dispositif destiné à l'exécution du procédé selon la revendication 6, caractérisé par le fait que l'on prévoit pour la détection un interféromètre de Michelson (11), une photodiode (17) et un dispositif électronique d'exploitation (18) branché en aval.

8. Dispositif selon la revendication 6 ou 7, caractérisé par le fait que l'on prévoit en tant que conducteur (9) de lumière un câble de fibres optiques, et comme source de lumière, un laser (14).

9. Dispositif selon les revendications 6 à 8, caractérisé par le fait que le capteur (1) présente plusieurs conducteurs (9) de lumière qui se terminent à sa surface, et que l'on prévoit un diviseur (15) de rayons entre le laser (14) et l'interféfomètre de Michelson (11).

10. Dispositif selon la revendication 6 ou 8, caractérisé par le fait que le capteur (1) est constitué par un matériau conducteur de la lumière et s'étend perpendiculairement à la surface extérieure du corps (4) entouré par un écoulement, et que le capteur (1) se termine par une surface transparente (19) dans laquelle sont prévus un prisme de renvoi (23) pour le rayon lumineux qu'il s'agit de guider et sans réflexion, une diode de position (25) destinée au rayon réfléchi.

11. Dispositif selon la revendciation 6, 8 ou 10, caractérisé par le fait que le capteur (1) présente la forme d'un bloc de matériau conducteur de la lumière et possède une coupe (28) de division des rayons.

12. Dispositif selon les revendications 6 à 11, caractérisé par le fait que l'on prévoit sur le capteur (11) une optique correctrice (32) destinés à élargir et/ou à régler le rayon provenant de la division.

13. Dispositif selon les revendications 6 à 12, caractérisé par le fait qu'un deuixième capteur (31) réalisé en un matériau conducteur de la lumière est affecté au capteur (1) et qu'il est disposé à angle droit par rapport à celui-ci.

14. Dispositif selon la revendication 13, caractérisé par le fait qu'en vue de la détermination de la viscosité des liquides, le capteur (1) est monté de façon telle que sa surface parcourue par le liquide est disposée verticalement.

## Claims

1. Method of determining skin friction on models and other bodies in a flow, or the viscosity of liquids, in which a viscous transparent liquid is applied in a layer (8) at the measurement point to the surface (3) of the body (4) and the change in thickness and/or surface inclination of the layer (8) occurring as a result of the flow conditions is detected in a light beam, characterized in that the light beam is guided from the interior of the body (4) in the flow in the direction towards the surface (3) of the body (4) and into the layer (8) of the viscous liquid, and in that the reflected light beam is collected in the interior of the body (4) in the flow.

2. Method according to Claim 1, characterized in that in addition to the light beam the viscous liquid is also guided from the interior of the body (4) in the flow onto the surface (3) of the body (4).

3. Method according to Claim 1, characterized in that a plurality of light beams are used in conjunction with one line for viscous liquid.

4. Method according to Claim 1 characterized in that for the purpose of determining the viscosity of liquids the measurement point is arranged vertically.

5. Method according to Claim 1 or 4, characterized in that the light beam from the interior of the body (4) in the flow is strengthened, and the subdivided beam is brought into interference with the reflected light beam.

6. Device for carrying out the method according to Claims 1 to 5, having a light source, a layer (8) of a viscous transparent liquid and a photodiode (17) for detecting the reflected light beam, characterized in that the device for determining changes in thickness and/or surface inclination has a planar sensor (1) that can be installed flush with the surface (3) of the body (4) in the flow, and in that there are provided a channel (6), ending in the sensor surface, for applying the liquid, and at least one light guide (9), likewise ending in the sensor surface, for feeding the light beam and for leading off the reflected light beam.

7. Device for carrying out the method according to Claim 6, characterized in that a Michelson interferometer (11), a photodiode (17) and downstream evaluation electronics (18) are provided for the purpose of detection.

8. Device according to Claim 6 or 7, characterized in that an optical fibre cable is provided as the light guide (9) and a laser (14) is provided as the light source.

9. Device according to Claims 6 to 8, characterized in that the sensor (1) has a plurality of light guides (9) ending in the sensor surface, and in that a beam splitter (15) is provided between the laser (14) and the Michelson interferometer (11).

10. Device according to Claim 6 or 8, characterized in that the sensor (1) consists of light-conducting material and extends normal to the surface of the body (4) in the flow, and in that the sensor (1) ends there in a transparent surface (19), in which there are provided a reflecting prism (23) for the light beam that is to be fed and, in a non-reflecting fashion a position diode (25) for the reflected light beam.

11. Device according to Claim 6, 8 or 10, characterized in that the sensor (1) made of light-conducting material has the form of a block, and has a beam-splitting section (28).

12. Device according to Claims 6 to 11, characterized in that correction optics (32) for expanding and/or adjusting the subdivided beam are provided on the sensor (1).

13. Device according to Claims 6 to 12, characterized in that a second sensor (31) made of light-conducting material is assigned to the sensor (1) and is arranged at a right-angle to the latter.

14. Device according to Claim 13, characterized in that for the purpose of determining the viscosity of liquids the sensor (1) is arranged so that its surface overflowed by liquid is vertical.

Fig. 1

Fig. 2

Fig. 3

EP 0 199 312 B1

Fig. 4

Fig. 5

3